# DEMANDE DE BREVET EUROPEEN

(11) **EP 0 667 278 A1**
(43) Date de publication de la demande: **16.08.1995**
(21) Numéro de dépôt: 95400271.3
(22) Date de dépôt: 09.02.1995
(51) Int. Cl.: B62D 1/19

(54) **Système de colonne de direction de sécurité, notamment de véhicule automobile**

(30) Priorité: 11.02.1994 FR 9401589; 11.02.1994 FR 9401590; 11.02.1994 FR 9401591
(71) Demandeur: ECIA - EQUIPEMENTS ET COMPOSANTS POUR L'INDUSTRIE AUTOMOBILE, F-25400 Audincourt (FR)
(72) Inventeur: Deschamps, Laurent, F-90160 Bessoncourt (FR); Courvoisier, Patrick, F-25600 Vieux-Charmont (FR); Bertrand, Jean-Marie, F-25700 Valentigney (FR); Lapalu, Nicolas, F-25350 Mandeure (FR); Paris, Claude, F-25420 Voujeaucourt (FR); Pourchot, Michel, F-25400 Audincourt (FR)
(74) Mandataire: Habasque, Etienne Joel Jean-François

(57) **Abrégé**

Ce système comprenant un ensemble de colonne (1) comportant une première portion (2) adaptée pour recevoir le volant de direction et comprenant des premiers moyens (3) de fixation sur le reste de la structure du véhicule (V), une seconde portion (4) adaptée pour être reliée au reste du mécanisme de direction du véhicule et comprenant des seconds moyens (5) de fixation sur le reste de la structure du véhicule et entre les première et seconde portions, des moyens (6) autorisant un rapprochement axial de la seconde portion de la première, en cas de choc sur la seconde portion, est caractérisé en ce que les premiers moyens de fixation (3) sont débrayables sous effort et en ce qu'il comporte des moyens (10) d'écartement de l'ensemble de colonne, du reste de la structure du véhicule, en cas de choc sur la seconde portion (4) de celui-ci.

## Description

La présente invention concerne un système de colonne de direction de sécurité, notamment de véhicule automobile.

On connaît déjà dans l'état de la technique, des systèmes de colonne de direction de ce type.

En régle générale, ces systèmes de colonne comprennent un ensemble de colonne comportant une première portion adaptée pour recevoir le volant de direction du véhicule et comprenant des premiers moyens de fixation sur le reste de la structure du véhicule, une seconde portion adaptée pour être reliée au reste du mécanisme de direction du véhicule et comprenant des seconds moyens de fixation sur le reste de la structure du véhicule et entre les première et seconde portions, des moyens autorisant un rapprochement axial de la seconde portion de la première en cas de choc sur la seconde portion, et comportant par exemple des moyens d'absorption d'énergie de choc par contrôle de ce déplacement.

Ces moyens d'absorption d'énergie sont par exemple constitués par des parties télescopiques l'une dans l'autre de l'ensemble de colonne, l'absorption d'énergie de choc étant assurée par exemple par des patins de friction interposés entre ces parties télescopiques.

On notera également que dans l'état de la technique, les premiers moyens de fixation de la première portion de l'ensemble de colonne sur le reste de la structure du véhicule, peuvent comporter des moyens de réglage de la position de celui-ci par exemple en hauteur et/ou en profondeur et comprennent dans ce cas par exemple, des moyens de verrouillage en position par serrage d'un organe de montage relié à l'ensemble de colonne, entre des flasques du reste de la structure du véhicule.

Sur certains véhicules, les seconds moyens de fixation de l'ensemble de colonne sont reliés à la structure de pédalier de ceux-ci.

Or, on a constaté lors d'essais de résistance aux chocs frontaux de certains véhicules équipés de systèmes de colonne de direction de ce type, que les seconds moyens de fixation avaient tendance à avancer dans l'habitacle du véhicule en se rapprochant du plancher de celui-ci, ce qui provoquait un pivotement de l'ensemble de colonne de direction autour de l'axe défini par les premiers moyens de fixation de celui-ci sur le reste de la structure du véhicule.

On conçoit que ceci est relativement dangereux pour le conducteur du véhicule dans la mesure où le volant de direction a alors tendance à remonter dans l'habitacle du véhicule, en direction du conducteur.

De plus, lorsque le volant est équipé d'un module à sac gonflable, celui-ci a alors tendance à se gonfler dans une direction autre que celle de la tête du conducteur.

Le but de l'invention est donc de résoudre ces problèmes en proposant un système de colonne de direction qui soit simple et fiable.

A cet effet, l'invention a pour objet un système de colonne de direction de sécurité à absorption d'énergie de choc par réduction de cote, notamment pour véhicule automobile, du type comprenant un ensemble de colonne comportant une première portion adaptée pour recevoir le volant de direction du véhicule et comprenant des premiers moyens de fixation sur le reste de la structure du véhicule, une seconde portion adaptée pour être reliée au reste du mécanisme de direction du véhicule et comprenant des seconds moyens de fixation sur le reste de la structure du véhicule et entre les première et seconde portions, des moyens autorisant un rapprochement axial de la seconde portion de la première, en cas de choc sur la seconde portion, caractérisé en ce que les premiers moyens de fixation sont débrayables sous effort et en ce qu'il comporte des moyens d'écartement de l'ensemble de colonne, du reste de la structure du véhicule, en cas de choc sur la seconde portion de celui-ci.

L'invention sera mieux comprise à la lecture de la description qui va suivre, donnée uniquement à titre d'exemple et faite en se référant aux dessins annexés, sur lesquels :
- les Fig.1 à 3 illustrent de façon schématique la structure et le fonctionnement d'un premier exemple de réalisation d'un système de colonne de direction de sécurité selon l'invention;
- les Fig.4 à 6 illustrent de façon schématique la structure et le fonctionnement de second, troisième et quatrième exemples de réalisation d'un système de colonne de direction de sécurité selon l'invention;
- les Fig.7 à 9 illustrent de façon schématique la structure et le fonctionnement d'un cinquième exemple de réalisation d'un système de colonne de direction de sécurité selon l'invention;
- la Fig.10 illustre de façon schématique la structure et le fonctionnement d'un sixième exemple de réalisation d'un système de colonne de direction de sécurité selon l'invention;
- les Fig.11 à 13 illustrent de façon schématique la structure et le fonctionnement d'un septième exemple de réalisation d'un système de colonne de direction de sécurité selon l'invention;
- les Fig.14 à 16 illustrent de façon schématique la structure et le fonctionnement d'un huitième exemple de réalisation d'un système de colonne de direction selon l'invention;
- les Fig.17 à 19 illustrent de façon schématique la structure et le fonctionnement d'un neuvième exemple de réalisation d'un système de colonne de direction de sécurité selon l'invention;
- les Fig.20 à 22 illustrent de façon schématique la structure et le fonctionnement d'un dixième exemple de réalisation d'un système de colonne de direction de sécurité selon l'invention; et
- les Fig. 23 à 25 illustrent de façon schématique la structure et le fonctionnement d'un onzième exemple de réalisation d'un système de colonne de direction de sécurité selon l'invention.

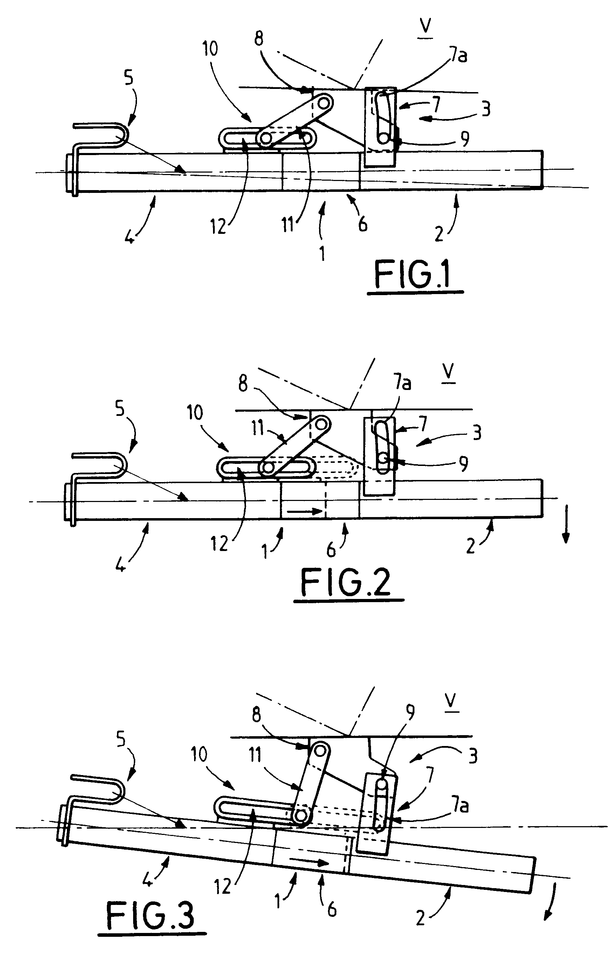

Ainsi qu'on peut le voir sur les figures 1 à 10, dans lesquelles des numéros de référence identiques désignent des éléments identiques ou analogues, un système de colonne de direction de sécurité selon l'invention est du type dans lequel l'ensemble de colonne de direction est par exemple un ensemble de colonne à absorption d'énergie de choc par réduction de cote bien connu dans l'état de la technique.

Ce système de colonne de direction comporte en effet un ensemble de colonne désigné par la référence générale 1 comprenant une première portion 2 adaptée pour recevoir le volant de direction du véhicule (non représenté) et comportant des premiers moyens de fixation 3 sur le reste de la structure du véhicule V.

L'ensemble de colonne comporte une seconde portion désignée par la référence générale 4 adaptée pour être reliée au reste du mécanisme de direction du véhicule et comprenant des seconds moyens de fixation 5 sur le reste de la structure du véhicule, comme par exemple la structure de pédalier de celui-ci.

Les moyens de fixation comprennent par exemple des ferrures ou des organes de montage reliés à un corps de l'ensemble de colonne de direction dans lequel est monté à rotation un arbre de direction. Cet arbre de direction comporte une première extrémité adaptée pour recevoir le volant et une seconde extrémité adaptée pour être reliée au reste du mécanisme de direction du véhicule.

Des moyens autorisant un rapprochement axial de la seconde portion de la première par exemple à absorption d'énergie de choc sont disposés entre les première et seconde portions de cet ensemble de colonne et sont désignés par la référence générale 6 sur ces figures.

Ces moyens d'absorption d'énergie de choc sont adaptés pour absorber une certaine énergie de choc par contrôle du rapprochement axial de la seconde portion de l'ensemble de colonne, de la première, en cas de choc sur cette seconde portion.

Différents modes de réalisation de ces moyens d'absorption d'énergie de choc peuvent être envisagés.

C'est ainsi par exemple que dans certains ensembles de colonne, le corps et l'arbre comportent chacun deux parties télescopiques l'une dans l'autre, des patins de friction étant interposés entre ces parties de ces éléments pour freiner leur déplacement et absorber l'énergie de choc.

Cependant, il va de soi que ces éléments peuvent également comporter des parties déformables ou autres, d'absorption d'énergie.

Il va de soi bien entendu que des moyens 6 ne comportant pas d'organe d'absorption d'énergie de choc peuvent également être utilisés.

Dans l'exemple de réalisation représenté sur ces figures, les premiers moyens 3 de fixation de l'ensemble de colonne sur le reste de la structure du véhicule, comprennent des moyens classiques de réglage de la position de celui-ci en hauteur et/ou en profondeur.

On peut en effet constater sur ces figures que l'ensemble de colonne comporte un organe de montage désigné par la référence générale 7, relié au corps de l'ensemble de colonne, cet organe de montage étant disposé entre deux flasques du reste de la structure du véhicule, dont un seul, 8, est illustré sur ces figures, la position de l'organe de montage et donc de l'ensemble de colonne pouvant être bloquée par exemple par des moyens de verrouillage actionnables par un utilisateur.

Différents modes de réalisation de ces moyens de verrouillage peuvent être envisagés et sont déjà connus dans l'état de la technique.

En régle générale, ces moyens de verrouillage comprennent un tirant par exemple 9, s'étendant entre les flasques du reste de la structure du véhicule et dans l'organe de montage 7 de l'ensemble de colonne. Ce tirant est associé à des moyens de serrage des flasques pour bloquer l'organe de montage et donc l'ensemble de colonne en position.

On notera que les flasques ou l'organe de montage peuvent comporter des lumières de guidage permettant le réglage en position de l'ensemble de colonne.

En fait, ces moyens de fixation sont débrayables sous effort, c'est à dire que dans le cas où ils sont constitués par des moyens de blocage par serrage, il suffit d'exercer un effort supérieur à la résistance fournie par le serrage de ces moyens pour obtenir un déplacement en hauteur de l'ensemble de colonne.

Cette caractéristique est mise à profit dans le système selon l'invention.

En effet, et comme on peut le voir sur ces figures, il est prévu des moyens 10 d'écartement de l'ensemble de colonne du reste de la structure du véhicule, en cas de choc sur la seconde portion de celui-ci.

Ces moyens d'écartement peuvent en fait comporter au moins un levier interposé entre un organe relié au reste de la structure du véhicule et la seconde portion 4 de l'ensemble de colonne.

Dans l'exemple de réalisation représenté sur les figures 1 à 3, ce levier 11 présente une extrémité articulée sur le flasque 8 du reste de la structure du véhicule et une autre extrémité engagée dans une lumière 12 de cette seconde portion 4 de l'ensemble de colonne, cette lumière présentant un axe à peu près parallèle à l'axe de l'ensemble de colonne.

Dans l'exemple de réalisation représenté sur ces figures, le tirant 9 est fixe en position par rapport aux flasques du reste de la structure du véhicule et l'organe de montage 7 comportent une lumière 7a permettant le déplacement de cet organe de montage par rapport au tirant.

On conçoit alors qu'en cas de choc sur la seconde portion de l'ensemble de colonne, celle-ci a tendance à se déplacer dans la direction de la flèche représentée sur cette figure et à se rapprocher axialement de la première portion de l'ensemble de colonne, dans la mesure où les moyens 6 permettent une réduction de la cote, c'est à dire de la longueur dans ce cas, de l'ensemble de colonne.

Au fur et à mesure de cette déformation, on conçoit alors que l'extrémité de la lumière 12 vient en appui sur l'extrémité correspondante du levier 11, ce qui provoque un écartement de l'ensemble de colonne et en particulier de la première portion de celui-ci, du reste de la structure du véhicule, afin de résoudre les différents problèmes mentionnés précédemment à propos de la remontée du volant dans l'habitacle du véhicule.

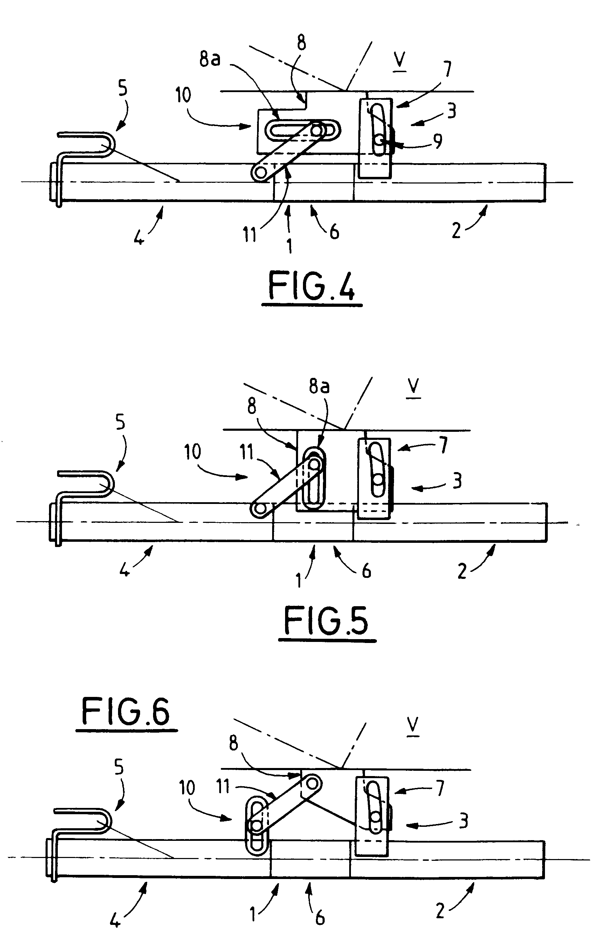

Bien entendu, d'autres modes de réalisation peuvent être envisagés comme ceux représentés sur les figures 4,5 et 6 dans lesquelles différentes dispositions de ce levier sont représentées.

C'est ainsi par exemple que sur la figure 4, l'une des extrémités du levier 11 est articulée sur la seconde portion 4 de l'ensemble de colonne, tandis que son autre extrémité est disposée dans une lumière 8a du flasque 8 du reste de la structure du véhicule.

Une structure analogue est représentée sur la figure 5.

Cependant, alors que sur la figure 4, la lumière du flasque présente un axe parallèle à l'axe de l'ensemble de colonne, sur la figure 5, cette lumière présente un axe à peu près perpendiculaire à l'axe de l'ensemble de colonne.

Sur la figure 6, on a représenté encore un autre exemple de réalisation dans lequel la lumière de réception de l'extrémité du levier 11, associée à la seconde portion 4 de l'ensemble de colonne, présente un axe à peu près perpendiculaire à l'axe de l'ensemble de colonne.

On notera que ces lumières sont également prévues pour permettre un réglage en hauteur de l'ensemble de colonne.

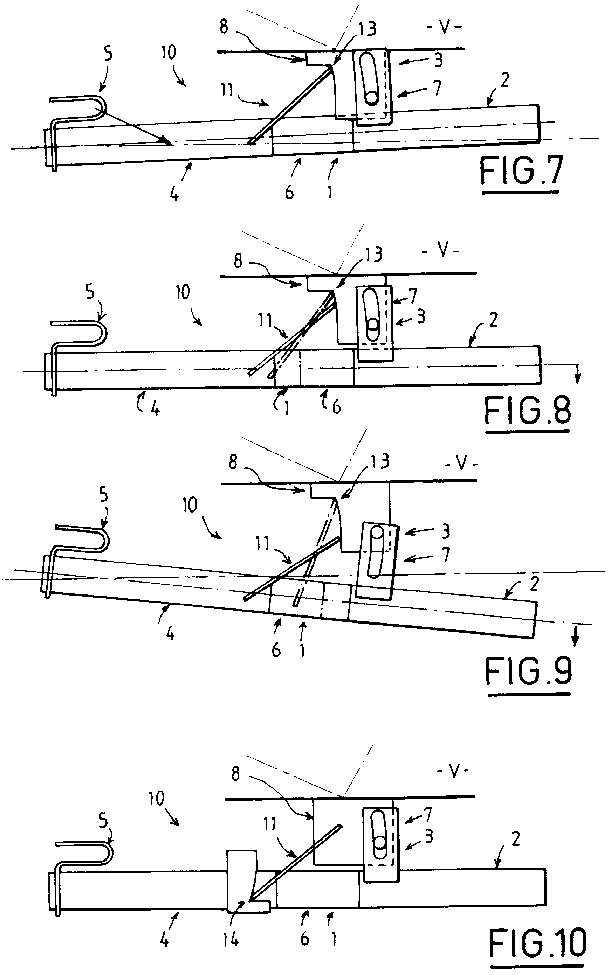

Bien entendu, d'autres modes de réalisation peuvent être envisagés comme ceux représentés sur les figures 7 à 10, dans lesquelles le levier 11 est relié à l'une de ses extrémités à l'un des éléments, seconde portion 4 de l'ensemble de colonne ou organe relié au reste de la structure du véhicule (respectivement figures 7 à 9 et figure 10) et dont l'autre extrémité est adaptée pour coopérer avec une surface de butée de l'autre élément, organe relié au reste de la structure du véhicule ou seconde portion de l'ensemble de colonne.

C'est ainsi par exemple que sur les figures 7 à 9, le levier 11 présentent une extrémité reliée à la seconde portion de l'ensemble de colonne 4, tandis que son autre extrémité est adaptée pour coopérer avec une surface de butée 13 du flasque 8 du reste de la structure du véhicule.

Sur la figure 10, le levier 11 est relié au flasque 8 du reste de la structure du véhicule et est adapté pour coopérer avec une surface de butée 14 de la seconde portion de l'ensemble de colonne.

On notera cependant que d'autres modes de réalisation de ce levier et de ses moyens de liaison aux autres éléments de l'ensemble de colonne peuvent être envisagés, et que les lumières ou les surfaces de butée décrites précédemment forment des butées d'appui pour l'extrémité correspondante du levier afin de provoquer l'écartement de l'ensemble de colonne du reste de la structure du véhicule lors du choc.

Bien entendu également, différents modes de réalisation des premiers moyens de fixation débrayables sous effort, peuvent être envisagés et ceux-ci peuvent par exemple être constitués par des organes de fixation frangibles sous effort lors du fonctionnement des moyens d'écartement.

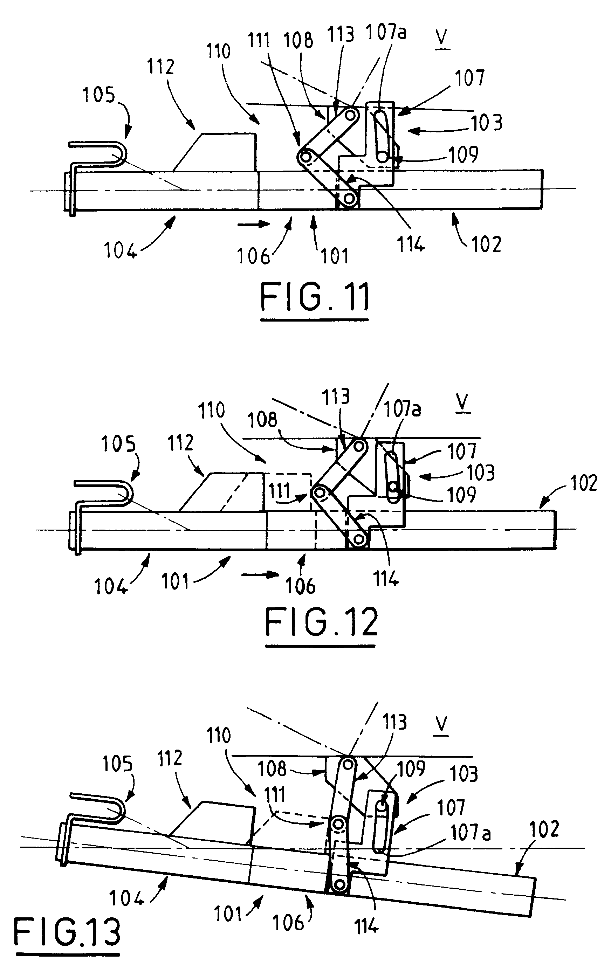

D'autres exemples de réalisation sont représentés sur les figures 11 à 22 dans lesquelles des numéros de référence identiques désignent des pièces identiques ou analogues.

Le système de colonne de direction représenté sur ces figures comporte en effet un ensemble de colonne désigné par la référence générale 101 comprenant une première portion 102 adaptée pour recevoir le volant de direction du véhicule (non représenté) et comportant des premiers moyens de fixation 103 sur le reste de la structure du véhicule V.

L'ensemble de colonne comporte une seconde portion désignée par la référence générale 104 adaptée pour être reliée au reste du mécanisme de direction du véhicule et comprenant des seconds moyens de fixation 105 sur le reste de la structure du véhicule, comme par exemple la structure de pédalier de celui-ci.

Les moyens de fixation comprennent par exemple des ferrures ou des organes de montage reliés à un corps de l'ensemble de colonne de direction dans lequel est monté à rotation un arbre de direction. Cet arbre de direction comporte une première extrémité adaptée pour recevoir le volant et une seconde extrémité adaptée pour être reliée au reste du mécanisme de direction du véhicule.

Des moyens autorisant un rapprochement axial de la seconde portion de la première par exemple à absorption d'énergie de choc, sont disposés entre les première et seconde portions de cet ensemble de colonne et sont désignés par la référence générale 106 sur ces figures.

Ces moyens d'absorption d'énergie de choc sont adaptés pour absorber une certaine énergie de choc par contrôle du rapprochement axial de la seconde portion de l'ensemble de colonne, de la première, en cas de choc sur cette seconde portion.

Différents modes de réalisation de ces moyens d'absorption d'énergie de choc peuvent être envisagés.

C'est ainsi par exemple que dans certains ensembles de colonne, le corps et l'arbre comportent chacun deux parties télescopiques l'une dans l'autre, des patins de friction étant interposés entre ces parties de ces éléments pour freiner leur déplacement et absorber l'énergie de choc.

Cependant, il va de soi que ces éléments peuvent également comporter des parties déformables ou autres, d'absorption d'énergie.

Il va de soi bien entendu que des moyens 106 ne comportant pas d'organe d'absorption d'énergie de choc peuvent également être utilisés.

Dans l'exemple de réalisation représenté sur ces figures, les premiers moyens 103 de fixation de l'ensemble de colonne sur le reste de la structure du véhicule, comprennent des moyens classiques de réglage de la position de celui-ci en hauteur et/ou en profondeur.

On peut en effet constater sur ces figures que l'ensemble de colonne comporte un organe de montage désigné par la référence générale 107, relié au corps de l'ensemble de colonne, cet organe de montage étant disposé entre deux flasques du reste de la structure du véhicule, dont un seul, 108, est illustré sur ces figures, la position de l'organe de montage et donc de l'ensemble de colonne pouvant être bloquée par exemple par des moyens de verrouillage actionnables par un utilisateur.

Différents modes de réalisation de ces moyens de verrouillage peuvent être envisagés et sont déjà connus dans l'état de la technique.

En régle générale, ces moyens de verrouillage comprennent un tirant par exemple 109, s'étendant entre les flasques du reste de la structure du véhicule et dans l'organe de montage 107 de l'ensemble de colonne. Ce tirant est associé à des moyens de serrage des flasques pour bloquer l'organe de montage et donc l'ensemble de colonne en position.

On notera que les flasques ou l'organe de montage peuvent comporter des lumières de guidage permettant le réglage en position de l'ensemble de colonne.

En fait, ces moyens de fixation sont débrayables sous effort, c'est à dire que dans le cas où ils sont constitués par des moyens de blocage par serrage, il suffit d'exercer un effort supérieur à la résistance fournie par le serrage de ces moyens pour obtenir un déplacement en hauteur de l'ensemble de colonne.

Cette caractéristique est mise à profit dans le système selon l'invention.

En effet, et comme on peut le voir sur ces figures, il est prévu des moyens 110 d'écartement de la première portion de l'ensemble de colonne, du reste de la structure du véhicule, en cas de choc sur la seconde portion de celui-ci.

Ces moyens d'écartement peuvent en fait comporter comme on peut le voir sur ces figures, au moins un mécanisme à genouillère désigné par la référence générale 111 interposé entre un organe relié au reste de la structure du véhicule et la première portion de l'ensemble de colonne 102.

La seconde portion 104 de l'ensemble de colonne comporte alors un organe de manoeuvre 112 du mécanisme à genouillère, lors de son rapprochement axial de la première portion, pour amener ce mécanisme à écarter la première portion de cet ensemble du reste de la structure du véhicule comme cela est illustré.

Bien entendu, différents modes de réalisation de ce mécanisme à genouillère et de cet organe de manoeuvre peuvent être envisagés.

Ce mécanisme peut en effet comporter comme on peut le voir sur les figures 11 à 16, deux bras 113 et 114 articulés l'un sur l'autre à l'une de leurs extrémités et dont l'autre extrémité de chacun est articulée l'une, sur le reste de la structure du véhicule et l'autre, sur la première portion de l'ensemble de colonne.

Dans l'exemple de réalisation représenté sur les figures 11 à 13, l'extrémité libre correspondante du bras 113 est articulée sur le flasque 108 du reste de la structure du véhicule, tandis que l'extrémité libre correspondante du bras 114 est articulée sur l'organe de montage 107 de l'ensemble de colonne ou directement sur celui-ci.

Cette structure permet également le réglage en hauteur de l'ensemble de colonne.

Dans l'exemple de réalisation représenté sur ces figures, le tirant 109 est fixe en position par rapport aux flasques du reste de la structure du véhicule et l'organe de montage 107 comporte une lumière 107a permettant le déplacement de cet organe de montage par rapport au tirant lors d'un réglage.

On conçoit qu'en cas de choc sur la seconde portion de l'ensemble de colonne, celle-ci a tendance à se déplacer dans la direction de la flèche représentée sur ces figures et à se rapprocher axialement de la première portion de l'ensemble de colonne, dans la mesure où les moyens 106 permettent une réduction de la cote, c'est à dire de la longueur dans ce cas, de l'ensemble de colonne.

Au fur et à mesure de cette déformation, on conçoit que l'organe de manoeuvre 112 relié à cette seconde portion 104 de l'ensemble de colonne vient en appui sur le mécanisme à genouillère et plus particulièrement sur les bras 113 et 114 de celui-ci, au niveau de l'articulation des extrémités correspondantes de ceux-ci l'une sur l'autre, ce qui provoque un écartement de la première portion 102 de l'ensemble de colonne du reste de la structure du véhicule, afin de résoudre les différents problèmes mentionnés précédemment à propos de la remontée du volant dans l'habitacle du véhicule.

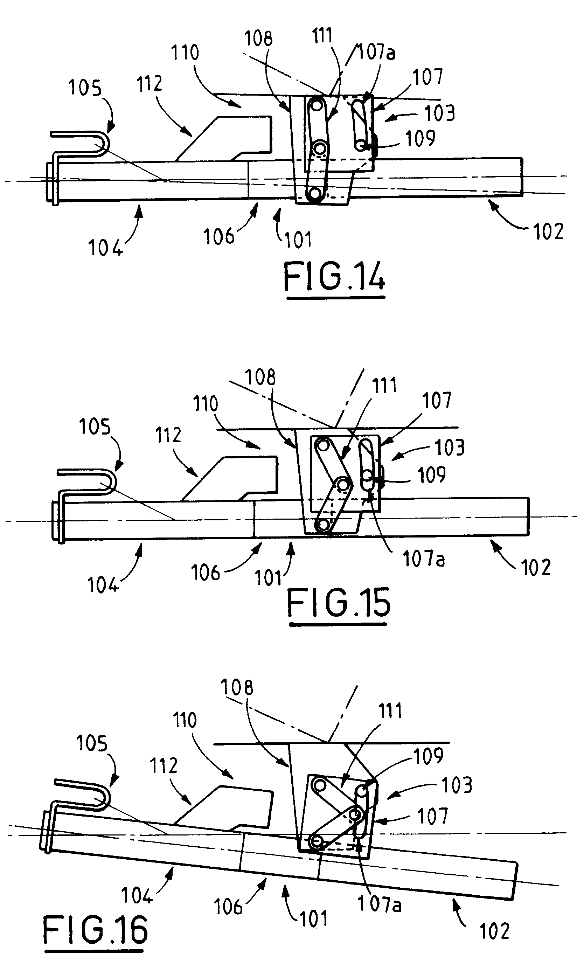

Bien entendu, une disposition inverse des bras du mécanisme à genouillère peut également être envisagée comme cela est représenté sur les figures 14 à 16.

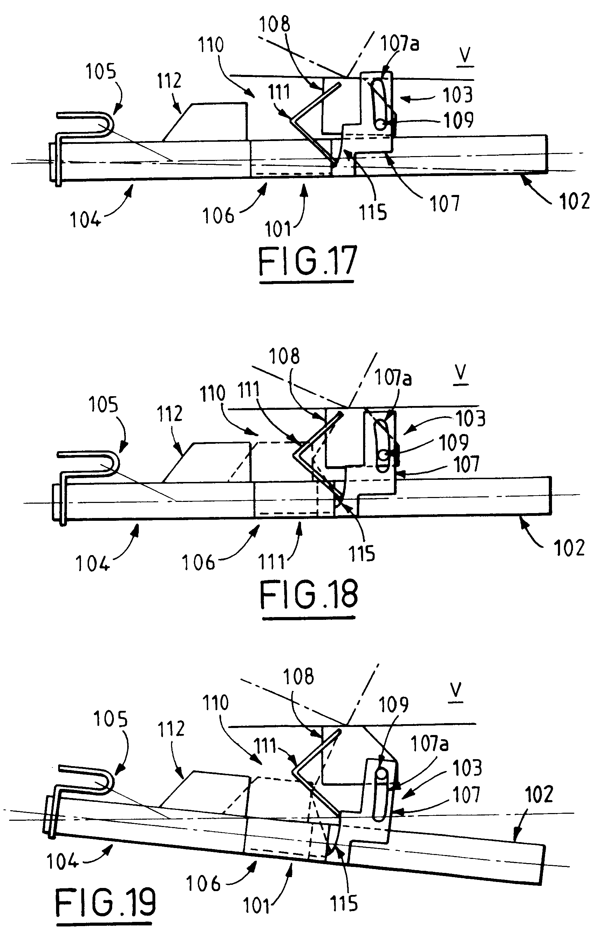

Il va de soi également comme on peut le voir sur les figures 17 à 22, que le mécanisme à genouillère peut comporter un organe déformable en L d'une seule pièce dont une extrémité est reliée à l'un des éléments, organe relié au reste de la structure du véhicule ou première portion de l'ensemble de colonne et dont une autre extrémité est adaptée pour coopérer avec une surface de butée de l'autre élément, première portion de l'ensemble de colonne ou organe relié au reste de la structure du véhicule.

C'est ainsi par exemple que sur les figures 17 à 19, cet organe déformable en L formant le mécanisme à genouillère 111 est relié par l'une de ses extrémités au flasque 108 du reste de la structure du véhicule, tandis que son autre extrémité est adaptée pour coopérer avec une surface de butée 115 de l'organe de montage 107 ou directement de la première portion 102 de l'ensemble de colonne.

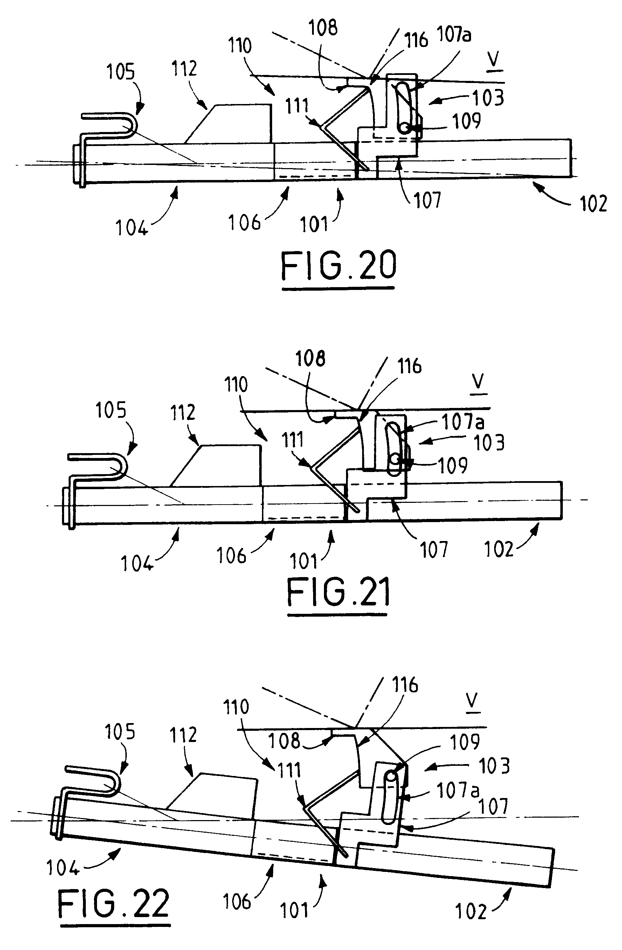

Dans l'exemple de réalisation représenté sur les Fig.20 à 22, l'organe déformable en L est relié par l'une de ses extrémités à l'organe de montage 107 ou directement à la première portion de l'ensemble de colonne et son autre extrémité est adaptée pour coopérer avec une surface de butée 116 du flasque 108 du reste de la structure du véhicule.

Dans ce cas également, l'organe de manoeuvre 112 relié à la seconde portion de l'ensemble de colonne qui peut être constitué par exemple par une partie en saillie de butée de celle-ci, est adapté pour provoquer une déformation de cet organe en cas de choc sur la seconde portion de l'ensemble de colonne, afin de provoquer un écartement de la première portion de celui-ci du reste de la structure du véhicule par l'intermédiaire de cet organe formant genouillère.

Bien entendu également, différents modes de réalisation des premiers moyens de fixation débrayables sous effort, peuvent être envisagés et ceux-ci peuvent par exemple être constitués par des organes de fixation frangibles sous effort lors du fonctionnement du mécanisme à genouillère.

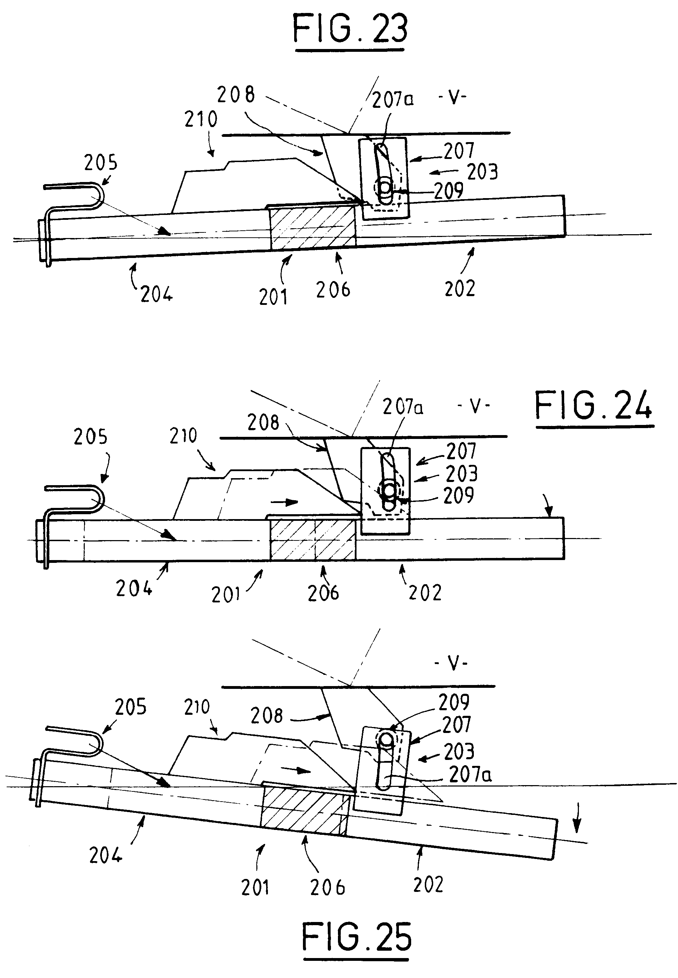

D'autres exemples de réalisation sont représentés sur les figures 23 à 25, dans lesquelles des numéros de référence identiques désignent des pièces identiques ou analogues.

Le système de colonne de direction représenté sur ces figures comporte en effet un ensemble de colonne désigné par la référence générale 201 comprenant une première portion 202 adaptée pour recevoir le volant de direction du véhicule (non représenté) et comportant des premiers moyens de fixation 203 sur le reste de la structure du véhicule V.

L'ensemble de colonne comporte une seconde portion désignée par la référence générale 204 adaptée pour être reliée au reste du mécanisme de direction du véhicule et comprenant des seconds moyens de fixation 205 sur le reste de la structure du véhicule, comme par exemple la structure de pédalier de celui-ci.

Les moyens de fixation comprennent par exemple des ferrures ou des organes de montage reliés à un corps de l'ensemble de colonne de direction dans lequel est monté à rotation un arbre de direction. Cet arbre de direction comporte une première extrémité adaptée pour recevoir le volant et une seconde extrémité adaptée pour être reliée au reste du mécanisme de direction du véhicule.

Des moyens autorisant un rapprochement axial de la seconde portion de la première, par exemple à absorption d'énergie de choc, sont disposés entre les première et seconde portions de cet ensemble de colonne et sont désignés par la référence générale 206 sur ces figures.

Ces moyens d'absorption d'énergie de choc sont adaptés pour absorber une certaine énergie de choc par contrôle du rapprochement axial de la seconde portion de l'ensemble de colonne, de la première, en cas de choc sur cette seconde portion.

Différents modes de réalisation de ces moyens d'absorption d'énergie de choc peuvent être envisagés.

C'est ainsi par exemple que dans certains ensembles de colonne, le corps et l'arbre comportent chacun deux parties télescopiques l'une dans l'autre, des patins de friction étant interposés entre ces parties de ces éléments pour freiner leur déplacement et absorber l'énergie de choc.

Cependant, il va de soi que ces éléments peuvent également comporter des parties déformables ou autres, d'absorption d'énergie.

Il va de soi bien entendu que des moyens 206 ne comportant pas d'organe d'absorption d'énergie peuvent également être utilisés.

Dans l'exemple de réalisation représenté sur ces figures, les premiers moyens 203 de fixation de l'ensemble de colonne sur le reste de la structure du véhicule, comprennent des moyens classiques de réglage de la position de celui-ci en hauteur et/ou en profondeur.

On peut en effet constater sur ces figures que l'ensemble de colonne comporte un organe de montage désigné par la référence générale 207, relié au corps de l'ensemble de colonne, cet organe de montage étant disposé entre deux flasques du reste de la structure du véhicule, dont un seul, 208, est illustré sur ces figures, la position de l'organe de montage et donc de l'ensemble de colonne pouvant être bloquée par exemple par des moyens de verrouillage actionnables par un utilisateur.

Différents modes de réalisation de ces moyens de verrouillage peuvent être envisagés et sont déjà connus dans l'état de la technique.

En régle générale, ces moyens de verrouillage comprennent un tirant par exemple 209, s'étendant entre les flasques du reste de la structure du véhicule et dans l'organe de montage 207 de l'ensemble de colonne. Ce tirant est associé à des moyens de serrage des flasques pour bloquer l'organe de montage et donc l'ensemble de colonne en position.

On notera que les flasques ou l'organe de montage peuvent comporter des lumières de guidage permettant le réglage en position de l'ensemble de colonne.

En fait, ces moyens de fixation sont débrayables sous effort, c'est à dire que dans le cas où ils sont constitués par des moyens de blocage par serrage, il suffit d'exercer un effort supérieur à la résistance fournie par le serrage de ces moyens pour obtenir un déplacement en hauteur de l'ensemble de colonne.

Cette caractéristique est mise à profit dans le système selon l'invention.

En effet, et comme on peut le voir sur ces figures, il est prévu des moyens 210 d'écartement de la première portion de l'ensemble de colonne du reste de la structure du véhicule en cas de choc sur la seconde portion de celui-ci.

Ces moyens d'écartement peuvent en fait comporter au moins un organe en forme de coin relié à la seconde portion 204 de l'ensemble de colonne et adapté pour s'engager entre une surface de butée d'un organe relié au reste de la structure du véhicule et une surface de butée complémentaire de la première portion 202 de l'ensemble de colonne lors d'un choc.

Dans l'exemple de réalisation représenté sur ces figures, le tirant est fixe en position par rapport aux flasques du reste de la structure du véhicule et l'organe de montage 207 comporte une lumière 207a permettant le déplacement de cet organe de montage par rapport au tirant lors d'un réglage tandis que l'organe en forme de coin 210 est adapté pour s'engager entre ce tirant et la première portion de l'ensemble de colonne en cas de choc sur la seconde portion de l'ensemble de colonne.

On conçoit en effet qu'en cas de choc sur cette seconde portion de l'ensemble de colonne, celle-ci a tendance à se déplacer dans la direction de la flèche représentée sur cette figure et à se rapprocher axialement de la première portion de l'ensemble de colonne, dans la mesure où les moyens 206 permettent une réduction de la cote, c'est à dire de la longueur dans ce cas, de l'ensemble de colonne.

Au fur et à mesure de cette déformation, on conçoit que l'organe en forme de coin en prenant appui sur le tirant 209, a tendance à écarter la première portion de l'ensemble de colonne du reste de la structure du véhicule, ce qui permet de résoudre les différents problèmes mentionnés précédemment à propos de la remontée du volant dans l'habitacle du véhicule.

Il va de soi bien entendu que différents modes de réalisation de cet organe en forme de coin peuvent être envisagés et que celui-ci peut prendre appui sur une surface de butée de n'importe quel organe relié au reste de la structure du véhicule, autre que le tirant des moyens de blocage de l'ensemble en position.

Bien entendu également, différents modes de réalisation des premiers moyens de fixation débrayables sous effort, peuvent être envisagés et ceux-ci peuvent par exemple être constitués par des organes de fixation frangibles sous effort lors du fonctionnement de l'organe en forme de coin.

## Revendications

1. Système de colonne de direction de sécurité à absorption d'énergie de choc par réduction de cote, notamment pour véhicule automobile, du type comprenant un ensemble de colonne (1;1O1;201) comportant une première portion (2;102;202) adaptée pour recevoir le volant de direction du véhicule et comprenant des premiers moyens (3;103;203) de fixation sur le reste de la structure du véhicule (V), une seconde portion (4;104;204) adaptée pour être reliée au reste du mécanisme de direction du véhicule et comprenant des seconds moyens (5;105;205) de fixation sur le reste de la structure du véhicule et entre les première et seconde portions, des moyens (6;106;206) autorisant un rapprochement axial de la seconde portion de la première, en cas de choc sur la seconde portion, caractérisé en ce que les premiers moyens de fixation (3;103;203) sont débrayables sous effort et en ce qu'il comporte des moyens (10;110;210) d'écartement de l'ensemble de colonne, du reste de la structure du véhicule, en cas de choc sur la seconde portion (4;104;204) de celui-ci.

2. Ensemble selon la revendication 1, caractérisé en ce que les moyens d'écartement comprennent au moins un levier (11) interposé entre un organe relié au reste de la structure du véhicule et la seconde portion de l'ensemble de colonne.

3. Ensemble selon la revendication 2, caractérisé en ce que l'une des extrémités du levier est reliée à l'un des éléments, organe relié au reste de la structure du véhicule ou seconde portion de l'ensemble de colonne et l'autre extrémité de celui-ci est adaptée pour coopérer avec une butée d'appui de l'autre élément, seconde portion de l'ensemble de colonne ou organe relié au reste de la structure du véhicule.

4. Ensemble selon la revendication 3, caractérisé en ce que la butée d'appui est formée par une surface de butée (13;14) ou une lumière (8a;12) de l'élément correspondant.

5. Ensemble selon l'une quelconque des revendications précédentes, caractérisé en ce que les premiers moyens de fixation (3) comprennent des moyens de réglage en position de l'ensemble de colonne comportant des moyens de verrouillage en position par serrage d'un organe de montage (7) relié à la première portion de l'ensemble de colonne, entre des flasques (8) reliés au reste de la structure du véhicule.

6. Ensemble selon l'une quelconque des revendications 1 à 4, caractérisé en ce que les premiers moyens de fixation comprennent des organes de fixation frangibles sous effort.

7. Ensemble selon la revendication 1, caractérisé en ce que les moyens d'écartement comportent des moyens (110;210) d'écartement de la première portion (102;202) de l'ensemble de colonne, du reste de la structure du véhicule, en cas de choc sur la seconde portion (104;204) de celui-ci.

8. Ensemble selon la revendication 7, caractérisé en ce que les moyens d'écartement (110) comprennent au moins un mécanisme à genouillère (111) interposé entre un organe relié au reste de la structure du véhicule et la première portion (102) de l'ensemble de colonne.

9. Ensemble selon la revendication 8, caractérisé en ce que la seconde portion (104) de l'ensemble de colonne comporte un organe de manoeuvre (112) du mécanisme à genouillère (111) lors de son rapprochement axial de la première portion.

10. Ensemble selon la revendication 8 ou 9, caractérisé en ce que le mécanisme à genouillère (111) comporte deux bras (113,114) articulés l'un sur l'autre à l'une de leurs extrémités et dont l'autre extrémité de chacun est articulée l'une, sur un organe relié au reste de la structure du véhicule et l'autre, sur la première portion de l'ensemble de colonne.

11. Ensemble selon la revendication 8 ou 9, caractérisé en ce que le mécanisme à genouillère (111) comporte un organe déformable en L dont une extrémité est reliée à l'un des éléments, organe relié au reste de la structure du véhicule (V) ou première portion de l'ensemble de colonne (102) et dont l'autre extrémité est adaptée pour coopérer avec une surface de butée (115;116) de l'autre élément, première portion de l'ensemble de colonne ou organe relié au reste de la structure du véhicule.

12. Ensemble selon l'une quelconque des revendications 7 à 11, caractérisé en ce que les premiers moyens de fixation (103) comprennent des moyens de réglage en position de l'ensemble de colonne comportant des moyens de verrouillage en position par serrage d'un organe de montage (107) relié à la première portion de l'ensemble de colonne, entre des flasques (108) reliés au reste de la structure du véhicule.

13. Ensemble selon l'une quelconque des revendications 7 à 11, caractérisé en ce que les premiers moyens de fixation comprennent des organes de fixation frangibles sous effort.

14. Ensemble selon la revendication 7, caractérisé en ce que les moyens d'écartement comprennent au moins un organe en forme de coin (210) relié à la seconde portion (204) de l'ensemble de colonne (201) et adapté pour s'engager entre une surface de butée d'un organe relié au reste de la structure du véhicule (V) et une surface de butée complémentaire de la première portion (202) de l'ensemble de colonne, lors du rapprochement de la seconde portion, de la première.

15. Ensemble selon l'une quelconque des revendications 7 ou 14, caractérisé en ce que les premiers moyens de fixation (203) comprennent des moyens de réglage en position de l'ensemble de colonne comportant des moyens de verrouillage en position par serrage d'un organe de montage (207) relié à la première portion de l'ensemble de colonne, entre des flasques (208) reliés au reste de la structure du véhicule.

16. Ensemble selon la revendication 7 ou 14, caractérisé en ce que les premiers moyens de fixation comprennent des organes de fixation frangibles sous effort.
